# EUROPEAN PATENT SPECIFICATION

(11) **EP 2 264 642 B1**
(45) Date of publication and mention of the grant of the patent: **26.02.2014**
(21) Application number: 09007300.8
(22) Date of filing: 02.06.2009
(51) Int. Cl.: G06K 7/00, G06K 19/07, H04L 12/00, H04L 29/00, H04W 36/00

(54) **Data exchange with a man-machine-device using short range radio communication**
Datenaustausch mit einer Mensch-Maschine-Vorrichtung unter Verwendung von Nahbereichsfunkkommunikation
Échange de données avec un dispositif homme-machine utilisant une communication radio à courte distance

(43) Date of publication of application: 22.12.2010
(73) Proprietor: Vodafone Holding GmbH, 40213 Düsseldorf (DE)
(72) Inventor: Hoeksel, Sebastiaan, 6229 VN Maastricht (NL); van Muijen, Robert, 3665 AS (BE); Waters, Patrick H., Redlynch Salisbury SP5 2HN (GB)
(74) Representative: Jostarndt, Hans-Dieter

(56) References cited:
- US-A- 5 798 694
- US-A1- 2004 032 377
- US-A1- 2006 012 464

## Description

The invention is related to the machine-to-machine technology. More specifically, the invention relates to a device attachable to an object and comprising a control module for receiving measuring data from at least one sensor and/or for controlling at least one actuator. Furthermore, the invention relates to methods for communicating with the device.

The term machine-to-machine technology or the alternative terms man-to-machine, machine-to-man, machine-to-mobile and mobile-to-machine technology, which are all abbreviated as M2M technology, generally referred to data communications from/to machines. In particular, the M2M technology allows for accessing objects or functionalities of objects from a remote location. Typically, the M2M technology is used for collecting information, sending indications of unusual situations, and setting parameters or otherwise controlling devices from remote locations. For this purpose M2M devices comprising suitable sensors and/or actuators may be attached to the object which is monitored or controlled. One example is an M2M device or tag that is attached to a container and signals the location of the container or other measured parameters to a remote location. One possibility to connect an M2M device and the remote location is to set up a connection via a mobile communication network.

An M2M device usually comprises a control module including application logic for controlling the sensors and/or actuators. Furthermore, the control module may be configured to control the data exchange between the M2M device and the remote location. Moreover, an M2M device usually stores data identifying and/or describing the object to which it is attached. In order to use an M2M device in different circumstances and in connection with different objects, it is advantageous that the application logic and further data stored in the M2M device can be configured by the user of the device. This allows a user to adapt a generic M2M device to his needs. One possibility for allowing the user to configure the M2M device would be to provide the M2M device with a user interface comprising a display and an input unit that allows the user to configure the device. However, a user interface would make the M2M more complex and costly. In addition, the M2M device would have to be supplied with power, when it is configured by means of a user interface. However, the M2M device may only be powered at its site of operation. This may be the case when the M2M device is energized by an external power supply at the site of operation or when an internal battery of the device is charged using energy conversion from light or movement at the site of operation. This makes it at least difficult to configure the M2M device before it is installed at its site of operation. Therefore, there is a need for an M2M device, which can be configured without using a user interface of the device and independent of a power supply of the device.

Furthermore, the M2M device may store data collected during the operation of the device. These data may be measuring data of one or more sensors of the device. It would again be possible to provide the M2M device with a user interface allowing reading such data from the device. However, for similar reasons as stated above, it would be advantageous to be able to read the data without using a user interface of the M2M device and independent of a power supply of the device.

US 2004/0032377 A1 describes a wireless communication device, which is placed inside a tire and. The device includes a flexible wave antenna for communicating with an interrogation reader. When the antenna is in the presence of the filed emitted by the interrogation reader, communication electronics are energized by the energy in the signal, thereby energizing the wireless communication device.

US 5 789 694 describes an electronic tag for monitoring food. The circuits within the electronic tag, particularly a memory of the tag, are powered by an electromagnetic power receiver.

US 2006/0012464A1 discloses a battery-assisted backscatter RFID transponder. The transponder includes an integrated circuit and an antenna. In the normal mode of operation, the integrated circuit is powered only with energy provided by a battery, while the energy of an interrogation radiation from a reader is only used for generating the backscattered radiation.

Therefore, it is an object to allow for communicating with an M2M device independent of a power supply of the device.

The invention is described by the independent claims, Preferred embodiments are set out in the dependent claims.

According to a first aspect of the invention, a device attachable to an object is suggested. The device comprises a control module for receiving measuring data from at least one sensor and/or for controlling at least one actuator. The device further comprises a communication means for communicating with an external reader unit via a radio connection using a radio field. During the communication with the reader unit the communication means can be supplied with power by means of the radio field, and the communication means is configured to store data received from the reader unit in the memory unit of the device and/or to read data to be transmitted to the reader unit from the memory unit, while the communication module is supplied with power by means of the radio field. The device further comprises a power supply means, where the power supply means is a power connector to connect the device to an external power supply circuit available at the site of operation of the device or is an autarkic power supply of the device. The device is configured to forward stored data received from the reader unit to the control module and/or to control storage in the memory unit of the data collected in the operation of the device and to be transmitted to the reader unit. The control module is able to access the memory unit to retrieve data from the memory unit and to write data to the memory unit, when the control module is supplied with power by the power supply means of the device. The data can be exchanged between the reader unit and the memory unit of the device while the communication module is in the passive communication mode, where the communication module is supplied with power by means of the radio field generated by the reader unit independently of the Power supply means of the device.

According to a second aspect of the invention a method for communicating with the device is suggested. The method comprises the steps of:
- establishing a radio connection between the communication means of the device and a reader unit using a radio field generated by the reader unit,
- during the communication supplying the communication module with power by means of the radio field in a passive communication mode,
- the communication module storing data received from the reader unit in a memory unit of the device and/or reading data to be transmitted to the reader unit from the memory unit, while the communication module is supplied with power by the radio field,
- characterized in that
- the stored data are forwarded from the memory unit to a control module of the device and/or data collected in the operation of the device are stored in the memory unit, when the control module is supplied with power by a power supply means of the device where the power supply means is a power connector to connect the device to an external power supply circuit available at the site of operation of the device or is an autarkic power supply of the device, and
- that the data can be exchanged between the reader unit and the memory unit of the device while the communication module is in the passive communication mode, where the communication module is supplied with power by means of the radio field generated by the reader unit independently of the power supply means of the device.

The invention involves the idea to provide a device, particularly an M2M device, with a communication means, that can be supplied with power by an external radio field generated by a reader unit when the reader unit communicates with the device. Furthermore, a memory is provided in the device which can be accessed by the communication means, while the communication means is supplied with power by the radio field generated by the reader unit, and which can be accessed by the control module, when the control module is energized by the power supply means of the device. Via the memory, data can be exchanged between the reader unit and the control module of the device. Thus, the communication between the reader unit and the control module of the device is independent of the power supply of the control module and a user interface of the device is not required for communicating with the device.

In one embodiment of the device and the methods, the device further comprises a radio module for communicating with a remote location via a communication network, particularly via a mobile communication network. Using the radio module measuring data of the sensor of the device may be sent to the remote location, thereby allowing monitoring the object to which the device is attached from the remote location. Furthermore, the device may be controlled from the remote location by means of commands transmitted to the device via the communication network.

In a further embodiment of the device and the methods, the radio connection is a wireless short range connection. In particular, the radio connection may be an NFC (Near Field Communication) connection, and the communication means may be an NFC-enabled module operating in a passive communication mode, when communicating with the reader unit. With the NFC technology an existing technology for short range communication can be used to establish a communication connection between the reader unit and the communication means of the device. Further on, the NFC technology already provides a passive communication mode, in which one of the communication partners can be powered by means of the radio field generated by the other communication partner.

At the time of the communication between the device and the reader unit, the control module does not have to be supplied with power by the power supply means of the device. Preferably, the control module is supplied with power by the power supply means upon an activation of the device. The device may be activated, when it is installed at its site of operation. However, data may be transmitted to the device before it is activated and installed at its site of operation.

In one embodiment of the device and the methods, the data transmitted to the device are configuration data. The configuration data may include program routines for controlling the operation of the device. In particular, the configuration data may include program routines for controlling the sensor and/or the actuator of the device. Likewise the programme routines included in the configuration data may affect the interaction between the M2M device and the remote location. The invention allows transmitting such configuration data to the device before the device is activated. This is advantageous, when there is a greater time difference between the data transfer and the activation and/or when the configuration data is not transferred to the device at its site of operation.

In a further embodiment of the device and the methods, the control module is configured to control storage of the data to be transmitted to the reader unit in the memory, while it is supplied with power by the power supply means of the device, the data being collected in the operation of the device. The data, which the control module stores in the memory, may be measuring data of the sensor of the device, for example.

A further embodiment of the device and the methods comprises that the control module is configured to transmit data collected in the operation of the device to the remote location using the radio module.

However, in certain circumstances, it can be advantageous to store data collected in the operation of the device locally in the device instead of or in addition to transmitting the data to the remote location via the communication network. Therefore, in one embodiment of the device and the methods, the control module is configured to store data collected in the operation of the device, when a predefined condition is fulfilled.

In a related embodiment of the device and the methods, the condition is fulfilled when a connection to the remote location via the communication network is not available and/or when energy reserves of the power supply means are below a predetermined threshold. In the latter case the energy provided by the power supply means may not be sufficient to energize the radio module and to transmit the data to the remote location. In particular, the radio module may be deactivated when the energy reserves of the power supply means are below the threshold. This also saves energy and prolongs the time of operation of the device.

Furthermore, the invention suggests a system comprising a device of the type described before and a reader unit. The reader unit is configured to generate a radio field for establishing a radio connection to the device and to receive data from the device or to transmit data to the device via the radio connection.

The aforementioned and other aspects of the invention will also be apparent from and elucidated with reference to the embodiments described hereinafter making reference to the drawings.

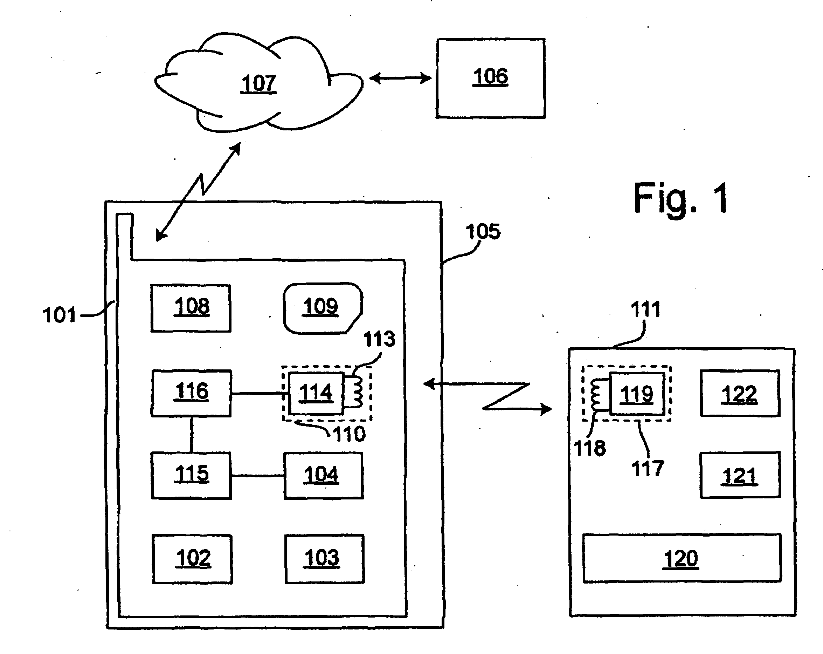

Reference will be made by way of example to the accompanying drawings in which
- Fig. 1: a schematic depiction of an M2M device and a reader device, which can communicate with the M2M device using short range radio communication.

Figure 1 schematically shows a schematic block diagram of an M2M device 101 removably or permanently attached to an object 105, which can be monitored and/or controlled from a remote location 106 by means of the M2M device 101.

The M2M device 101 comprises a control module 104, which is coupled to least one sensor 102 and/or at least one actuator 103. The sensor 102 may be integrated into the housing of the M2M device 101 or the sensor 102 is arranged in a separate housing and electrically connected to the control module 104. In the latter case, the M2M device 101 can be used to access sensors 102, which form a component of the object 105 and sensors 102 which are attached to the object 105 in addition to the M2M device 101. As the sensor 102, the actuator 103 can be integrated into the housing of the M2M device 101, or it can be an external actuator 103, which is an integral part of the object 105 or of a further device attached to the object 105. Preferably, the control module 104 can interact with different external sensors 102 and or actuators 103 using different configurations. This is especially advantageous, when the M2M device is used in connection with external sensors 102 and/or actuators 103 and allows an adaption of the M2M device to such sensors 102 and/or actuators 103.

A sensor 102 coupled to the control module 104 is configured to measure certain parameter in connection with the object 105 to which the M2M device 101 is attached. In particular, the sensor 102 may be configured to measure a parameter that is related to the operating conditions within or around the object 105, such as temperature, pressure, humidity or the like. Likewise, the sensor 102 may comprise a unit for determining the position of the object 105, such as, for example, a GPS receiver (GPS: Global Positioning System). In this configuration, the M2M device 101 can be used to track and trace the object 105, particularly on a transportation route. In addition or as an alternative, the sensor 102 may be adapted to detect the operating state of certain components of the object 105, such as, for example, the operating state of a lock mechanism, the operating state of a motor or the like.

An actuator 103 of the M2M device may be adapted to act on the object 105 to 9 example, the actuator 103 may comprise a motor or an alternative drive for this purpose. The actuator 103 is controlled by the control module 104 according to a control program, which is stored in the control module 104. The control of the actuator 103 may be based on a fixed procedure. Likewise, the control may be responsive to data measured by one or more sensors 102 of the M2M device 101 in the sense of a closed-loop control.

A connection between the M2M device 101 and the remote location 106 is established via a communication network 107 to which the M2M device 101 can be connected wirelessly. Preferably, the communication network 107 is a mobile communication network, which may be configured according to the GSM or UMTS standard, for example (GSM: Global System for Mobile Communications; UMTS: Universal Mobile Telecommunications System). The remote location 106 may access the mobile communication network 107 directly or via another network, such as, for example, the Internet, which has a gateway to the mobile communication network 107. The communication between the device 101 and the remote location 106 via the mobile communication network 107 may be based on any bearer service provided in the network. Particularly, a bearer service for non-speech data may be used, such as SMS (Short Message Service), USSD (Unstructured Supplementary Services Data), CSD (Circuit Switched Data), HSCSD (High Speed Circuit Switched Data) or GPRS (General Packet Radio System). However, it may likewise be provided to exchange information in the form of speech data using a corresponding bearer service of the mobile communication network 107.

For accessing to the mobile communication network 107, the M2M device 101 comprises a radio module 108 which provides a radio interface for connecting to the mobile communication network 107 and which is configured according to the mobile communication standard on which the mobile communication net-10 ule 109 for identifying and/or authenticating the M2M device 101 to the mobile communication network 107. The identification module 109 is issued by a mobile network operator and linked to a subscription of the user or owner of the M2M device 101 with the mobile network operator. As it is usually the case in mobile communications, the identification module 109 may be provided on a smartcard, which is inserted into a card reader of the M2M device 101. In particular, if the mobile communication network 107 is a GSM network, the identification module 109 is configured as a SIM (Subscriber Identification Module) card according to the GSM standard comprising a SIM application, which provides the identification and authentication service. If the mobile communication network 107 is a UMTS network, the smartcard is configured as a UICC (Universal Integrated Circuit Card) comprising a USIM (Universal Subscriber Identification Module) application providing the identification and authentication service. Of course, other form factors can also be used to provide a SIM, USIM or further identification modules, such as, for example, a VQFN8 chip form factor. The identification module may 109 also be hosted in a form factor soldered into the M2M device 101. Alternatively, the identification module 109 may be hosted in a secured memory space of the M2M device 101, particularly of the control module 104.

The radio module 108 is coupled to the control module 104, which is likewise connected to the sensor 102 and/or actuator 103 of the M2M device 101. The control module 104 may be configured as a microcontroller comprising a processor for running programs and a memory for storing program code and further data. In order to interact with the sensor 102 and/or actuator 103 the control module 104 may be equipped with an analogue-to-digital converter (ADC) and/or a digital-to-analogue converter (DAC) thereby allowing a data exchange with an analogue sensor 102 or actuator 103. The ADC converts analogue signals received from the sensor 102 or actuator 103 into digital signals before forwarding them to the processor of the control module 104. Similarly, the DAC converts digital signals received from processor into analogue signals that are forwarded to the sensor 102 or actuator 103. In addition or as an alternative, the control module 104 may provide a GPIO interface, for interacting with the sensor 102 and actuator 103 (GPIO: General Purpose Input/Output). Of course, the control module 104 can make use of additional or other interfaces to the sensor 102 and/or actuator 103.

The control module 104 provides application logic to control the sensor 102 and/or actuator 103 and the communication with the remote location 106. Among other functions, the control module 104 is able to request and receive measuring data from the sensors 102. The measuring data may be forwarded to the remote location 106 via the mobile communication network 107 using the radio module 108 and/or the measuring data may be stored locally in the control module 104. Likewise, the control module 104 may be able to evaluate measuring data received from the sensors 102 and send the result of the evaluation to the remote location 106 and/or store the result locally. For instance, this allows for generating summary data from the sensor signals.

Moreover, the control module 104 is able to send control commands to the sensor 102 and/or actuator 103 to control their operations. In particular, the control module 104 may be configured to activate and deactivate the sensor 102 and/or actuator 103 or certain functionalities thereof, to request measuring data from the sensor 102, and to influence operating parameters of the sensor 102 and actuator 103. The control module 104 may operate according to predefined program routines, which are stored in the control module 104. In addition or as an alternative the control module 104 functions of the control module 104 are invoked upon request from the remote location 106. Such requests are sent to the M2M device 101 via the mobile communication network 107 and received by means of the radio module 108.

Furthermore, the control module 104 preferably comprises management data relating to the object 105 to which the M2M device 101 is attached. These data may include a unique identification which may be linked permanently or temporarily to the object 105, In addition, data describing the object 105 may be stored in the control module 104. For example, in case the object 105 is a shipping container, these data may describe one or more of the following details: the contents of the container and details relating thereto, the container's weight, the container's dimensions, the container's place of origin, its destination, possible interstations of the container, the means of transportation provided for shipping the container, the owner of the container, the sender of the container's contents and the addressee of the contents.

As an alternative to the storage of the management data in the M2M device 101 it may be provided that a database entry comprising the management data is linked to the M2M device 101. The database entry is linked to the M2M device 101 by means of an identification code assigned to the M2M device 101 and to the database entry. In this embodiment, the control module 104 stores the identification code, which can be used to read the related management data from the database. Preferably, the identification can also be sent from the control module 104 to the remote location 106 to allow the remote location to identify the object 105 to which the M2M device 101 is attached, when the M2M device 101 communicates with the remote location 106. The database storing the management data may be operated at the remote location 106.

As described before, the M2M device 101 can be used in different circumstances and can be attached to different objects 105. In order to facilitate the manufacture and use of the M2M device 101, it does not comprise a fixed configuration, but the configuration can be defined and preferably also modified by a user of the M2M device 101. The option to modify the configuration makes it 13 and after a first use an M2M device 101 can be reused with another object 105. The configuration of the M2M device 101 preferably comprises the management data described before and the application logic stored in the control module 104. Thus, one M2M device 101 can be used ubiquitously in a plurality of different applications.

The components of the M2M device 101 are supplied with power by a power supply means 112. The power supply means 112 may be a power connector connecting the M2M device 101 to an external power supply circuit. Using the power supply means 112, the M2M device 101 may be connected to a power supply circuit available at the site of operation of the M2M device 101. This may be a power supply circuit of the transportation vehicle transporting the object 105 or it may be a power supply circuit of the object 105 itself, for example. In further embodiments, the power supply means 112 is an autarkic power supply of the M2M device 101 and generates power from chemical or mechanical processes. Examples of such power supply means 112 are batteries, solar cells or means for generating power from movement of the M2M device 101. Furthermore, the power supply means 112 may comprise a battery that may be charged during the operation of the M2M device by means of energy conversion.

Configuration data may be transmitted to the M2M device 101 using a communication interface implementing a wireless short range communication technology. The communication interface includes a communication module 110, which is wirelessly accessible using a reader unit 111, Preferably, the reader unit 111 is a portable handheld device, which can be used by an operator to access the M2M device 101. In this embodiment, a data connection between the reader unit 111 and the communication module 110 can be established when the reader unit 111 is brought in proximity of the M2M device 101. However, the may be accessed by bringing the M2M device 101 into proximity of the stationary reader unit.

The communication module 110 comprises an antenna 113 and an antenna controller 114. The antenna 113 is used for sending and transmitting data wirelessly and the antenna controller 114 controls the antenna 113 on a physical level. On the application level, a communication application 116 coupled to the communication module 110, particularly to the antenna controller 114, controls the operation of the antenna 113 and the communication module 110. The antenna controller 114 and the communication application 116 may be integrated into a single chip coupled to the antenna 113. However, in further embodiments, the communication application 116 may not be implemented in one chip together with communication module 110. Rather, the communication application 116 may be integrated into the identification module 109, for example. In this case, the identification module 109 is connected to the communication module 110 via an interface allowing a data exchange between the communication application 116 and the communication module 110.

The communication module 110 can be operated in a passive mode, in which it does not need to be energized by the power supply means 112 of the M2M device 101. Rather, when exchanging data with the reader unit 111, the communication module 110 is supplied with power inductively by means of the radio frequency (RF) field generated by the reader unit 111. This RF field induces a current in the antenna 113 of the communication module 110 and thereby energizes the communication module 110. If the communication application 116 is implemented in the control module chip, it can be used when the control module 104 is active. If the communication application 116 is provided by the identification module 109, the identification module 109 may also be supplied with power via a suitable interface between the antenna controller 114 and the identification passive communication mode. When the communication module 110 is supplied with energy in the passive operation mode, data can be exchanged between the M2M device 101 and the reader unit 111 independent of the power supply means 112. Moreover, in the passive communication mode, the communication application 116 may be able to store data received from the reader unit 111 in a memory unit 115 for future use in the M2M device 101, and/or it is able to read data stored in the memory unit 115 and to transmit such data to the reader unit 111.

The memory unit 115 is a non-volatile data storage that is configured as a so called shared memory. It is coupled to or part of the component of the M2M device 101 providing the communication application 116 and it can be accessed by the communication application 116 and by the control module 104. The control module 104 may also be able to access the memory unit 115 for changing its access parameters for the remote location 106 or the radio module 108, for example. However, the control module 104 may only be able to access the memory unit 115 when it is energized by means of the power supply means 112 of the M2M device 101. The reason for this is that the power provided by the reader unit 111 by means of he RF field is not sufficient to energize the control module 104 of the M2M device 101 as well, in particular because the control module 104 may be a relatively complex microcontroller having relative high power consumption. Therefore, the memory unit 115 may be used as a kind of buffer in a communication between the control module 104 and the reader unit 111. When the control module 104 is supplied with power by the power supply means 112, it may retrieve data from the memory unit 115, which previously have been stored there by the communication module 110 in the passive communication mode. Similarly, the control module 104 may write data to the memory unit 115, which data the communication application 116 may read from the memory unit 115 and transmit to the reader unit 111 in passive communication mode. This allows a data exchange between the reader unit 111 and the M2M device 101, when the M2M device 101 is not supplied with power.

In one embodiment, the communication module 110 and the reader unit 111 use the NFC technology for exchanging data (NFC: Near Field Communication). The NFC technology is specified in ISO 18092 and 21481, ECMA 340.352 and 356, and ETSI TS 502 109 and allows contactless communication over a short distance between several centimetres and several ten centimetres. NFC-enabled devices comprise a magnetic loop antenna operating at a frequency of 13.56 MHz and an NFC controller controlling the antenna on the physical level. The NFC controller interacts with one or more NFC applications controlling the operation of the NFC-enabled device on the application level.

Thus, when the communication module 110 of the M2M device 101 is an NFC module, the communication application 116 is configured as an NFC application. Some identification modules 109, particular SIM or USIM cards, also provide the option to install NFC applications and to interact with NFC controllers. In particular, the Single Wire Protocol (SWP) has been developed for this purpose and may be used to connect the identification module 109 and the communication module 110, when the communication application 116 is hosted in the identification module 109.

The NFC technology provides different communication modes, which correspond to different tag types defined in the NFC specifications and which differ in the communication protocols used and in the data transmission rates, for example. Type 1 and type 2 tags are based on the specification ISO 14443 type A, type 3 tags use the specification ISO 18092 and type 4 tags are compatible to the specifications ISO 14443 type A and type B. Furthermore, NFC-enabled devices can communicate in an active and in a passive communication mode. high frequency field at the carrier frequency in order to send data to the other communication partner. In the passive communication mode, only one communication partner, which is called initiator, generates a high frequency field at the carrier frequency that is used by the initiator to transmit data to the other communication partner which is called target. The target uses load modulation for transmitting data to the initiator. This means that the current through the antenna of the target is modulated using a controllable resistor. Thus, when the M2M device 101 or the communication module 110 of the M2M device 101 may be operated as the target and the reader unit 111 may be operated as the initiator in the passive communication mode, in which the communication module 110 is energized by means of the RF field generated by the reader unit 111.

As mentioned before, short range communication between the reader unit 111 and the M2M device 101 may be used to transmit configuration data from the reader unit 111 to the M2M device 101. Configuration data may be any data that determines the operation of the M2M device 101. In particular, configuration data may determine one or more of the aspects of the configuration of the M2M device 101, which have been described before. Thus, the configuration data may include management and/or identification data or program routines for controlling the operation of the M2M device 101 including program routines for controlling the sensor 102 and/or the actuator 103 and program routines affecting the interaction between the control module 104 and the radio module 108 or the remote location 106, for example.

For transmitting configuration data to the M2M device 101, the reader unit 111 likewise comprises a communication module 117. The communication module 117 is configured similarly to the communication module 110 of the M2M device 101. In particular, it also comprises an antenna 118 and an antenna controller 119 controlling the antenna 118 on the physical level. The antenna 118 and the Furthermore, the reader unit 111 comprises a configuration application 121 communicating with the communication module 117, The configuration may be a software program run on a microcontroller of the reader unit 111, Preferably, the configuration application 117 is configured as an NFC application.

In contrast to the M2M device 101, the reader unit 111 comprises a user interface 120, which allows an operator to interact with the reader unit 111 and which may include a display unit and an input unit, such as, for example, a keyboard. In particular, the user interface 120 allows an operator of the reader unit 111 to control the configuration application 121.

The configuration application 121 has access to the configuration data to be transmitted to the M2M device 101. In one embodiment, the configuration data is generated by the operator of the reader unit 111 by means of the configuration application 121. In addition or as an alternative, the configuration data can be transmitted to the reader unit 111 from another device using a suitable communication interface of the reader unit 111.

In order to transmit the configuration data to the M2M device 101, an operator starts the corresponding functionality of the configuration application 121 and brings the M2M device 101 and the reader unit 111 in close proximity to each other, If the reader unit 111 is portable, this may be done by simply "touching" the M2M device 101 with the reader unit 111. The communication module 117 of the reader unit 111 is operated in an active mode in this situation and sends a signal that can be received within the communication distance by generating a corresponding RF field. When the RF field is strong enough at the site of the antenna 113 of the communication module 110 of the M2M device 101, the communication module 110 is activated. In the course of the communication, the reader unit 111 notifies the M2M device 101 that new configuration data are munication module 117 of the reader unit 111 to the communication module 110 of the M2M device 101.

When receiving the data, the communication application 116 of the M2M device 101 recognizes that the data are configuration data. Upon receipt of the configuration data, the communication application 116 controls the storage of the received data in the memory unit 115. As described before, the energy that is necessary for this process is taken from the RF field generated by the reader unit 111. After the configuration data have been stored in the memory unit 115, the communication module 110 of the M2M device 101 is deactivated again. Then, the distance between the M2M device 101 and the reader unit 111 may be increased again and/or the communication module of the reader unit 111 may be turned off again. Alternatively, the M2M device 101 remains activated and listens for configuration data from the reader unit 110 as long as the reader unit 110 powers the M2M device 101 via its RF field.

After the configuration data have been stored in the memory unit 115, the M2M device 101 can be installed at its site of operation, if the configuration has not been done there. Then, the M2M device 101 can be activated. This may be done by connecting the power supply means 112 of the M2M device 101 to an external power supply, by manually actuating a corresponding switch of the M2M device 101 and/or by transmitting an activation signal, which is received in the communication module 110 of the M2M device 101. In the latter case, the activation signal may likewise be received by the communication module 110 in the passive communication mode.

Upon activation of the M2M device 101, the control module 104 checks whether new configuration data are stored in the memory unit 115. When the control module 104 determines that new configuration data are stored in the memory the new configuration so that it can be used in the operation of the M2M device 101. Then, the M2M device 101 operates using the new configuration data. When the M2M device 101 already had been configured before, i.e. when configuration data were already stored and used in the M2M device 101 before the new configuration data are transmitted, the new configuration data may replace the existing configuration data. This allows for a re-configuration of the M2M device 101. Thus, the M2M device 101 can be reused in different circumstances.

As it is apparent from the description above that, from the perspective of the operator of the reader unit 111, the configuration of the M2M device 101 is simply done by touching the M2M device 101 with the reader unit 111. The M2M device 101 does not have to be powered on in this process. Thus, the configuration of the M2M device 101 can be easily integrated in the setting up of the M2M device 101 at its site of operation, for example, in a preparation of a container or another object 105 for shipping.

Furthermore, data which are collected during the operation of the M2M device 101 can be read out by means of the reader unit 111. As described before, the data may be measuring data of the sensor 102. Likewise, it may be management data, which have been stored in the M2M device 101 before. For allowing the data to be read by means of the reader unit 111, the data are stored in the memory unit 115. Management data may be stored permanently in the memory unit 115. Likewise, the control module 104 may store in the memory unit 115 selected data, which are provided for being read by the reader unit 111. In one embodiment, data which are collected in the operation of the M2M device 101 are stored in the memory unit 115 by default, If the data are also transmitted to the remote location 106 via the mobile communication network 107, storage of the data in the memory unit 115 corresponds to a backup preventing data loss. As an alternative, collected data may only be stored in the memory unit 115 in predetermined situations, while in other situations they are exclusively transmitted to the remote location 106.

Situations, in which the collected data are stored in the memory unit 115 may be situations in which the radio module 108 only has a weak connection to the mobile communication network 107 or is out of network coverage. In such situations, it may not be possible to send the data to the remote location 106 and the data may be saved by storing them in the memory unit 115. In a further embodiment, the control module 104 is configured to recognize the state-of-charge of a battery supplying the M2M device 101 with energy. When the state-of-charge falls below a predetermined threshold, the control module 104 may deactivate the radio module 108 in order to conserve power. When the radio module 108 Is turned off, the data collected by the control module 104 are stored in the memory unit 115 instead of being transmitted to the remote location 106 via the mobile communication network 107. This allows a longer operating time of the M2M and prevents loss of data.

For reading data from the M2M device 101 the reader unit 111 comprises a reading application 122, which is configured to control the communication module 117 of the reader unit 111 to receive the data from the M2M device 101. Before reading the data from the M2M device 101, the operator of the reading unit 111 activates the reading application 122. Then, the operator brings the reader unit 111 and the M2M device 101 in close proximity to each other. This may again be done by "touching" the M2M device 101 with the reader unit 111. The communication module 117 of reader unit 111 is operated in an active mode in this situation and sends a signal that can be received within the communication distance by generating a corresponding RF field. When the RF field is strong enough at the site of the antenna 113 of the communication module 110 of the M2M device 101, the communication module 110 is activated. 22 After the communication module 110 has been activated, the reader unit 111 requests the transmission of data stored in the memory unit 115. The request is processed in the communication application 116 of the M2M device 101, which controls the communication module 110 to transmit the relevant data stored in the memory unit 115 to the reader unit 111, When the data have been received in the reader unit 111, the operator may be notified accordingly and may separate the reader unit 111 and the M2M device 101 again. The communication module 110 of the M2M device 101 is deactivated again after the transmission of the data.

Since the communication module 110 of the M2M device 101 is operated in the passive mode, when the data are transmitted to the reader unit 111, the data can be retrieved, when the M2M device 101 is disconnected from its power supply or an internal power source of the M2M device 101 is exhausted.

## Claims

1. A device (101) attachable to an object (105) and comprising
- a control module (104) for receiving measuring data from at least one sensor (102) and/or for controlling at least one actuator (103),
- and a communication module (110) for communicating with an external reader unit (111) via a radio connection using a radio field, wherein during the communication with the reader unit (111) the communication module (110) can be supplied with power by means of the radio field in a passive communication mode,
- a memory unit (115), where the communication module (110) is configured to store data received from the reader unit (111) in the memory unit (115) of the device (101) and/or to read data to be transmitted to the reader unit (111) from the memory unit (115), while the communication module (110) is supplied with power by means of the radio field,
**characterized in that**
- the device (101) comprises a power supply means (112), where the power supply means is a power connector to connect the device (101) to an external power supply circuit available at the site of operation of the device (101) or is an autarkic power supply of the device (101),
- said device (101) is configured to forward stored data received from the reader unit (111) to the control module (104) and/or to control storage in the memory unit (115) of the data collected in the operation of the device (101) and to be transmitted to the reader unit (105),
- the control module (104) is able to access the memory unit (115) to retrieve data from the memory unit (115) and to write data to the memory unit, when the control module (104) is supplied with power by the power supply means (112) of the device (101),
- and the data can be exchanged between the reader unit (111) and the memory unit (115) of the device (101) while the communication module (110) is in the passive communication mode, where the communication module (110) is supplied with power by means of the radio field generated by the reader unit (111) independently of the power supply means (112) of the device (101).

2. The device (101) according to claim 1 further comprising a radio module (108) for communicating with a remote location (106) via a communication network (107), particularly via a mobile communication network.

3. The device (101) according to one of the preceding claims, wherein the radio connection is a wireless short range connection.

4. The device (101) according to one of the preceding claims, wherein the radio connection is an NFC connection and the control module (104) is an NFC-enabled module operating in a passive communication mode, when communicating with the reader unit (111).

5. The device (101) according to one of the preceding claims, wherein the control module (104) is supplied with power by the power supply means upon an activation of the device (101).

6. The device (101) according to one of the preceding claims, wherein data transmitted to the device (101) are configuration data including program routines for controlling the operation of the device (101).

7. The device (101) according to one of the preceding claims, wherein the collected data are measuring data of the sensor (102).

8. The device (101) according to one of the preceding claims, wherein the control module (104) is configured to transmit data collected in the operation of the device (101) to the remote location using the radio module (108).

9. The device (101) according to one of the preceding claims, wherein the control module (104) is configured to store data collected in the operation in the device (101), when a predefined condition is fulfilled.

10. The device (101) according to claim 9, wherein the condition is fulfilled when a connection to the remote location (106) via the communication is not available and/or when energy reserves of the power supply means are below a predetermined threshold.

11. A system comprising a device (101) according to one of the preceding claims and a reader unit (111), the reader unit (111) being configured to generate a radio field for establishing a radio connection to the device (101) and to receive data from the device (101) or to transmit data to the device (101) via the radio connection.

12. Method for communicating with a device (101), comprising the steps of:
- establishing a radio connection between a communication module (110) of the device (101) and a reader unit (111) using a radio field generated by the reader unit (111),
- during the communication supplying the communication module (110) with power by means of the radio field in a passive communication mode,
- the communication module (110) storing data received from the reader unit (111) in a memory unit (115) of the device (101) and/or reading data to be transmitted to the reader unit (111) from the memory unit (115), while the communication module (110) is supplied with power by the radio field,
**characterized in that**
- the stored data are forwarded from the memory unit (115) to a control module (104) of the device (101) and/or data collected in the operation of the device (101) are stored in the memory unit (115), when the control module is supplied with power by a power supply means (112) of the device (101), where the power supply means (112) is a power connector to connect the device (101) to an external power supply circuit available at the site of operation of the device (101) or is an autarkic power supply of the device (101), and
- that the data can be exchanged between the reader unit (111) and the memory unit (115) of the device (101) while the communication module (110) is in the passive communication mode, where the communication module (110) is supplied with power by means of the radio field generated by the reader unit (111) independently of the power supply means (112) of the device (101).

## Patentansprüche

1. Vorrichtung (101), die an einem Gegenstand (105) befestigt werden kann und umfasst:
- ein Steuermodul (104) zum Empfangen von Messdaten von mindestens einem Sensor (102) und/oder zum Steuern mindestens eines Aktuators (103),
- und ein Kommunikationsmodul (110) zum Kommunizieren mit einer externen Leseeinheit (111) über eine Funkverbindung unter Verwendung eines Funkfelds, wobei dem Kommunikationsmodul (110) während der Kommunikation mit der Leseeinheit (111) mittels des Funkfelds in einer passiven Kommunikationsbetriebsart Energie zugeführt werden kann,
- eine Speichereinheit (115), wobei das Kommunikationsmodul (110) zum Speichern von Daten, die von der Leseeinheit (111) empfangen werden, in der Speichereinheit (115) der Vorrichtung (101) konfiguriert ist und/oder zum Lesen von Daten konfiguriert ist, die an die Leseeinheit (111) gesendet werden sollen, von der Speichereinheit (115), während dem Kommunikationsmodul (110) mittels des Funkfelds Energie zugeführt wird,
**dadurch gekennzeichnet, dass** a
- die Vorrichtung (101) ein Energieversorgungsmittel (112) umfasst, wobei das Energieversorgungsmittel ein Stromstecker zum Verbinden der Vorrichtung (101) mit einer externen Energieversorgungsschaltung, die an dem Betriebsstandort der Vorrichtung (101) verfügbar ist, oder eine selbständige Energieversorgung der Vorrichtung (101) ist,
- die Vorrichtung (101) zum Weiterleiten von von der Leseeinheit (111) empfangenen gespeicherten Daten zu dem Steuermodul (104) und/oder zum Steuern der Speicherung von in dem Betrieb der Vorrichtung (101) erhobenen und zu der Leseeinheit (105) zu sendenden Daten in der Speichereinheit (115) konfiguriert ist,
- das Steuermodul (104) auf die Speichereinheit (115) zugreifen kann, um Daten von der Speichereinheit (115) auszulesen und um Daten in die Speichereinheit zu schreiben, wenn dem Steuermodul (104) durch das Energieversorgungsmittel (112) der Vorrichtung (101) Energie zugeführt wird,
- und dass die Daten zwischen der Leseeinheit (111) und der Speichereinheit (115) der Vorrichtung (101) ausgetauscht werden können, während das Kommunikationsmodul (110) in der passiven Kommunikationsbetriebsart ist, wobei dem Kommunikationsmodul (110) mittels des durch die Leseeinheit (111) erzeugten Funkfelds unabhängig von dem Energieversorgungsmittel (112) der Vorrichtung (101) Energie zugeführt wird.

2. Vorrichtung (101) nach Anspruch 1, die ferner ein Funkmodul (108) zum Kommunizieren mit einem fernen Ort (106) über ein Kommunikationsnetz (107), insbesondere über ein Mobilkommunikationsnetz, umfasst.

3. Vorrichtung (101) nach einem der vorhergehenden Ansprüche, wobei die Funkverbindung eine drahtlose kurzreichweitige Verbindung ist.

4. Vorrichtung (101) nach einem der vorhergehenden Ansprüche, wobei die Funkverbindung eine NFC-Verbindung ist und das Steuermodul (104) ein NFC-fähiges Modul ist, das in einer passiven Kommunikationsbetriebsart arbeitet, wenn es mit der Leseeinheit (111) kommuniziert.

5. Vorrichtung (101) nach einem der vorhergehenden Ansprüche, wobei dem Steuermodul (104) durch das Energieversorgungsmittel bei einer Aktivierung der Vorrichtung (101) Energie zugeführt wird.

6. Vorrichtung (101) nach einem der vorhergehenden Ansprüche, wobei die an die Vorrichtung (101) gesendeten Daten Konfigurationsdaten einschließlich Programmroutinen zum Steuern des Betriebs der Vorrichtung (101) sind.

7. Vorrichtung (101) nach einem der vorhergehenden Ansprüche, wobei die erhobenen Daten Messdaten des Sensors (102) sind.

8. Vorrichtung (101) nach einem der vorhergehenden Ansprüche, wobei das Steuermodul (104) zum Senden von in dem Betrieb der Vorrichtung (101) erhobenen Daten an den fernen Ort unter Verwendung des Funkmoduls (108) konfiguriert ist.

9. Vorrichtung (101) nach einem der vorhergehenden Ansprüche, wobei das Steuermodul (104) zum Speichern von in dem Betrieb der Vorrichtung (101) erhobenen Daten konfiguriert ist, wenn eine vorgegebene Bedingung erfüllt ist.

10. Vorrichtung (101) nach Anspruch 9, wobei die Bedingung erfüllt ist, wenn eine Verbindung mit dem fernen Ort (106) über die Kommunikation nicht verfügbar ist und/oder wenn die Energiereserven des Energieversorgungsmittels unter einem vorgegebenen Schwellenwert liegen.

11. System, das eine Vorrichtung (101) nach einem der vorhergehenden Ansprüche und eine Leseeinheit (111) umfasst, wobei die Leseeinheit (111) zum Erzeugen eines Funkfelds zum Aufbauen einer Funkverbindung mit der Vorrichtung (101) und zum Empfangen von Daten von der Vorrichtung (101) oder zum Senden von Daten an die Vorrichtung (101) über die Funkverbindung konfiguriert ist.

12. Verfahren zum Kommunizieren mit einer Vorrichtung (101), wobei das Verfahren die folgenden Schritte umfasst:
- Aufbauen einer Funkverbindung zwischen einem Kommunikationsmodul (110) der Vorrichtung (101) und einer Leseeinheit (111) unter Verwendung eines durch die Leseeinheit (111) erzeugten Funkfelds,
- Zuführen von Energie mittels des Funkfelds in einer passiven Kommunikationsbetriebsart zu dem Kommunikationsmodul (110) während der Kommunikation,
- Speichern von Daten von der Leseeinheit (111) in einer Speichereinheit (115) der Vorrichtung (101) und/oder Lesen von an die Leseeinheit (111) zu sendenden Daten von der Speichereinheit (115) durch das Kommunikationsmodul (110), während dem Kommunikationsmodul (110) durch das Funkfeld Energie zugeführt wird,
**dadurch gekennzeichnet, dass**
- die gespeicherten Daten von der Speichereinheit (115) zu einem Steuermodul (104) der Vorrichtung (101) weitergeleitet werden und/oder die in dem Betrieb der Vorrichtung (101) erhobenen Daten in der Speichereinheit (115) gespeichert werden, wenn dem Steuermodul durch ein Energieversorgungsmittel (112) der Vorrichtung (101) Energie zugeführt wird, wobei das Energieversorgungsmittel (112) ein Stromstecker zum Verbinden der Vorrichtung (101) mit einer externen Energieversorgungsschaltung, die an dem Betriebsstandort der Vorrichtung (101) verfügbar ist, oder eine selbständige Energieversorgung der Vorrichtung (101) ist, und
- dass die Daten zwischen der Leseeinheit (111) und der Speichereinheit (115) der Vorrichtung (101) ausgetauscht werden können, während das Kommunikationsmodul (110) in der passiven Kommunikationsbetriebsart ist, wobei dem Kommunikationsmodul (110) mittels des durch die Leseeinheit (111) erzeugten Funkfelds unabhängig von dem Energieversorgungsmittel (112) der Vorrichtung (101) Energie zugeführt wird.

## Revendications

1. Dispositif (101) pouvant être relié à un objet (105) et comprenant
- un module de commande (104) pour recevoir des données de mesure d'au moins un capteur (102) et/ou pour commander au moins un actionneur (103),
- et un module de communication (110) pour communiquer avec un module de lecteur externe (111) par le biais d'une connexion radio utilisant un champ radio, dans lequel, au cours de la communication avec le module de lecteur (111), le module de communication (110) peut être alimenté électriquement au moyen du champ radio dans un mode de communication passif,
- un module de mémoire (115), où le module de communication (110) est configuré pour stocker des données reçues du module de lecteur (111) dans le module de mémoire (115) du dispositif (101) et/ou pour lire des données devant être transmises au module de lecteur (111) depuis le module de mémoire (115) tandis que le module de communication (110) est alimenté électriquement au moyen du champ radio,
**caractérisé en ce que**
- le dispositif (101) comprend un moyen d'alimentation électrique (112), où le moyen d'alimentation électrique est un connecteur électrique pour connecter le dispositif (101) à un circuit d'alimentation électrique externe disponible au site de fonctionnement du dispositif (101) ou est une alimentation électrique autarcique du dispositif (101),
- ledit dispositif (101) est configuré pour transférer des données stockées reçues du module de lecteur (111) au module de commande (104) et/ou .pour commander le stockage dans le module de mémoire (115) des données recueillies au cours du fonctionnement du dispositif (101) et devant être transmises au module de lecteur (105),
- le module de commande (104) est capable d'accéder au module de mémoire (115) pour récupérer des données du module de mémoire (115) et pour écrire des données sur le module de mémoire lorsque le module de commande (104) est alimenté électriquement par le moyen d'alimentation électrique (112) du dispositif (101),
- et les données peuvent être échangées entre le module de lecteur (111) et le module de mémoire (115) du dispositif (101) tandis que le module de communication (110) est dans le mode de communication passif, où le module de communication (110) est alimenté électriquement au moyen du champ radio généré par le module de lecteur (111) indépendamment du moyen d'alimentation électrique (112) du dispositif (101).

2. Dispositif (101) selon la revendication 1, comprenant en outre un module radio (108) pour communiquer avec un emplacement distant (106) par le biais d'un réseau de communication (107), notamment par le biais d'un réseau de communication mobile.

3. Dispositif (101) selon une des revendications précédentes, dans lequel la connexion radio est une connexion sans fil à courte distance.

4. Dispositif (101) selon une des revendications précédentes, dans lequel la connexion radio est une connexion NFC et le module de commande (104) est un module NFC fonctionnant dans un mode de communication passif lors de la communication avec le module de lecteur (111),

5. Dispositif (101) selon une des revendications précédentes, dans lequel le module de commande (104) est alimenté électriquement par le moyen d'alimentation électrique suite à une activation du dispositif (101).

6. Dispositif (101) selon une des revendications précédentes, dans lequel des données transmises au dispositif (101) sont des données de configuration incluant des routines de programme pour commander le fonctionnement du dispositif (101).

7. Dispositif (101) selon une des revendications précédentes, dans lequel les données recueillies sont des données de mesure du capteur (102).

8. Dispositif (101) selon une des revendications précédentes, dans lequel le module de commande (104) est configuré pour transmettre des données recueillies au cours du fonctionnement du dispositif (101) à l'emplacement distant en utilisant le module radio (108).

9. Dispositif (101) selon une des revendications précédentes, dans lequel le module de commande (104) est configuré pour stocker des données recueillies au cours du fonctionnement du dispositif (101) lorsqu'une condition prédéfinie est satisfaite.

10. Dispositif (101) selon la revendication 9, dans lequel la condition est satisfaite lorsqu'une connexion à l'emplacement distant (106) par le biais de la communication n'est pas disponible et/ou lorsque des réserves d'énergie du moyen d'alimentation électrique sont inférieures à un seuil prédéterminé.

11. Système comprenant un dispositif (101) selon une des revendications précédentes et un module de lecteur (111), le module de lecteur (111) étant configuré pour générer un champ radio afin d'établir une connexion radio au dispositif (101) et pour recevoir des données du dispositif (101) ou pour transmettre des données au dispositif (101) par le biais de la connexion radio.

12. Procédé de communication avec un dispositif (101), comprenant les étapes consistant à :
- établir une connexion radio entre un module de communication (110) du dispositif (101) et un module de lecteur (111) en utilisant un champ radio généré par le module de lecteur (111),
- au cours de la communication, alimenter électriquement le module de communication (110) au moyen du champ radio dans un mode de communication passif,
- le module de communication (110) stockant des données reçues du module de lecteur (111) dans un module de mémoire (115) du dispositif (101) et/ou lisant des données devant être transmises au module de lecteur (111) depuis le module de mémoire (115) tandis que le module de communication (110) est alimenté électriquement par le champ radio,
**caractérisé en ce que**
- les données stockées sont transférées du module de mémoire (115) à un module de commande (104) du dispositif (101) et/ou des données recueillies au cours du fonctionnement du dispositif (101) sont stockées dans le module de mémoire (115) lorsque le module de commande est alimenté électriquement par un moyen d'alimentation électrique (112) du dispositif (101), où le moyen d'alimentation électrique (112) est un connecteur électrique pour connecter le dispositif (101) à un circuit d'alimentation électrique externe disponible au site de fonctionnement du dispositif (101) ou est une alimentation électrique autarcique du dispositif (101), et
- que les données peuvent être échangées entre le module de lecteur (111) et le module de mémoire (115) du dispositif (101) tandis que le module de communication (110) est dans le mode de communication passif, où le module de communication (110) est alimenté électriquement au moyen du champ radio généré par le module de lecteur (111) indépendamment du moyen d'alimentation électrique (112) du dispositif (101).
